# EUROPÄISCHE PATENTSCHRIFT

(11) **EP 1 136 158 B1**
(45) Veröffentlichungstag und Bekanntmachung des Hinweises auf die Patenterteilung: **21.06.2006**
(21) Anmeldenummer: 01105620.7
(22) Anmeldetag: 07.03.2001
(51) Int. Cl.: B23B 29/04

(54) **Schneidplattenhalter für Drehwerkzeuge sowie Stechplatten hierfür**
Cutting insert holder for turning tools and grooving insert therefor
Porte plaquette de coupe et plaquette du rainurage

(30) Priorität: 16.03.2000 DE 10012821; 31.08.2000 DE 10042779
(43) Veröffentlichungstag der Anmeldung: 26.09.2001
(73) Patentinhaber: Sandvik Intellectual Property AB, 811 81 Sandviken (SE)
(72) Erfinder: Schiffers, Norbert, 41199 Mönchengladbach (DE)
(74) Vertreter: Lieke, Winfried

(56) Entgegenhaltungen:
- DE-A- 2 315 044
- DE-A- 3 241 748
- US-A- 3 163 918
- US-A- 4 573 832

## Beschreibung

Die vorliegende Erfindung betrifft einen Schneidplattenhalter für Drehwerkzeuge gemäß dem Oberbegriff des Anspruchs 1. Weiterhin betrifft die vorliegende Erfindung auch eine Stechplatte gemäß dem Oberbegriff des Anspruchs 17.

In erster Linie betrifft die Erfindung einen Schneiplattenhalter für eine Drehmaschine. Unter Drehen wird Spanen mit geschlossener im allgemeinen kreisförmiger Schnittbewegung verstanden. Dabei erfolgt die Spanabnahme durch eine Schnittbewegung gegen eine geradlinige Vorschubbewegung des Werkzeuges senkrecht oder parallel zur Drehachse. Dabei ist mit Drehachse die Drehachse des Werkstücks gemeint, wenn sich das Werkstück dreht. Bei stillstehendem Werkstück und umlaufendem Werkzeug, z. B. Ringdrehmaschinen, Plan- und Ausdrehwerkzeugen mit Bohrstangen auf Bohr- und Fräsmaschinen, muß Drehachse als Drehachse des umlaufenden Werkzeugs verstanden werden.

Solche Schneidplattenhalter sind in vielfältigen Ausführungsformen auf dem Markt erhältlich. Dabei wird im allgemeinen eine Schneid- oder Stechplatte in den Schneidplattenhalter eingesetzt und mit diesem verschraubt. Dann kann der Schneidplattenhalter mit der Drehmaschine verbunden werden. Zur Durchführung des Trennverfahrens wird dann der Schneidplattenhalter durch die Drehmaschine beispielsweise in Richtung der Achse des sich drehenden Werkstückes bewegt, so daß der im Schneidplattenhalter fixierte Schneideinsatz mit dem Werkstück in Eingriff tritt und dieses beispielsweise geschält oder abgestochen wird.

Ein Schneidplattenhalter mit den eingangs genannten Merkmalen ist beispielsweise bekannt aus dem US-Patent 3,163,918 und auch aus dem US-Patent 4,573,832. Soweit die bekannten Schneidplattenhalter Einrichtungen zum Halten mehrerer Schneidplatten aufweisen, ist die Positionierung der entsprechenden Schneidplatten relativ aufwendig, insbesondere dann, wenn mehrere Schneidplatten unterschiedlich tief in ein sich drehendes Werkstück eintauchen sollen.

Dabei ist auch das Auswechseln der Schneid- bzw. Stechplatten relativ zeitaufwendig und bei Schneidplattenhaltern mit nur einer Schneidplatte ist, wenn eine Mehrzahl von Nuten in das Werkstück eingebracht werden sollen, oder eine Mehrzahl von Scheiben von dem Werkstück abgestochen werden sollen, das Trennverfahren sehr zeitaufwendig ist, da der Schneidplattenhalter samt Stechplatte bzw. Schneideinsatz für jede Nut bzw. jeden Abstechvorgang einzeln in Vorschubrichtung bewegt werden muß. Überdies wird die Schneidplatte bei den Ausführungsformen nach den oben genannten US-Patenten erst nach der Justierung der Schneidplatte sicher im Schneidplattenhalter gehalten, so daß, insbesondere bei einer Überkopfmontierung die Stechplatte aus dem Stechplattenhalter bzw. dem Halteelement herausrutschen bzw. herausfallen kann.

Der vorliegenden Erfindung liegt daher die Aufgabe zu Grunde einen Schneidplattenhalter bereitzustellen, der die oben genannten Nachteile überwindet.

Erfindungsgemäß wird diese Aufgabe dadurch gelöst, daß der Schneidplattenhalter mindestens zwei Halteelemente aufweist, die jeweils zum Halten je eines Stecheinsatzes vorgesehen sind, wobei die Halteelemente in mindestens eine Richtung, vorzugsweise in Vorschubrichtung, unabhängig voneinander verstellbar sind.

Dabei sind die mindestens zwei Stecheinsätze in der gehaltenen Position vorzugsweise derart angeordnet, daß während des Trennvorgangs zumindest zeitweise mindestens zwei Stecheinsätze gleichzeitig mit dem sich drehenden Werkstück in Eingriff treten. Dadurch, daß der Schneidplattenhalter mehrere Stecheinsätze halten kann und diese somit gleichzeitig in Vorschubrichtung bewegen kann, kann das Drehverfahren deutlich verkürzt werden. Während mit herkömmlichen Schneidplattenhaltern jede Nut bzw. jeder Abstechvorgang einzeln durchgeführt werden mußte, kann mit dem erfindungsgemäßen Schneidplattenhalter gleich eine Mehrzahl von Nuten bzw. Abstechvorgängen in einem Verfahrensschritt durchgeführt werden.

Die Stecheinsätze werden vorzugsweise im Schneidplattenhalter derart gehalten, daß sie im wesentlichen parallel zueinander stehen.

Der Schneidplattenhalter ist derart ausgebildet, daß er mindestens zwei Halteelemente aufweist, die jeweils zum Halten eines Stecheinsatzes vorgesehen sind. Dadurch, daß jeder Stecheinsatz von einem eigenen Halteelement gehalten wird, ist ein einfaches Wechseln eines Teiles der Stecheinsatzes möglich.

Erfindungsgemäß ist weiterhin vorgesehen, daß die Halteelemente in mindestens eine Richtung, vorzugsweise in Vorschubrichtung, unabhängig voneinander verstellbar sind. Durch diese Maßnahme können die einzelnen Stecheinsätze in Vorschubrichtung unabhängig voneinander eingestellt werden. Dadurch ist es beispielsweise möglich, mit Hilfe des Schneidplattenhalters gleichzeitig Nuten verschiedener Tiefe in das Werkstück zu drehen. Diejenigen Stecheinsätze, welche tiefere Nuten erzeugen sollen, werden samt ihres Halteelements einfach gegenüber den anderen Stecheinsätzen etwas in Vorschubrichtung nach vorne verschoben.

Der Schneidplattenhalter weist zweckmäßigerweise einen Grundkörper auf, in dem die Halteelemente angeordnet sind, wobei die Halteelemente in dem Grundkörper fixierbar sind.

Eine besonders bevorzugte Ausführungsform sieht vor, daß eine Klemmvorrichtung zur Fixierung der Halteelemente im Grundkörper angeordnet ist. Durch die Fixierung mittels der Klemmvorrichtung kann der einzelne Stecheinsatz sehr schnell in dem Halteelement aufgenommen und fixiert werden. Dadurch ist gewährleistet, daß die einzelnen Halteelemente nach Justierung in Vorschubrichtung leicht und schnell fixiert werden können. Besonders bevorzugt werden die Halteelemente durch die Klemmvorrichtung in einer Richtung geklemmt, die senkrecht zur Vorschubrichtung, vorzugsweise parallel zur Drehachse, liegt.

Besonders zweckmäßig ist eine Ausführungsform des Schneidplattenhalters, bei dem die Halteelemente austauschbar sind. Es ist dadurch möglich, entweder die Halteelemente samt Stecheinsatz auszutauschen, um beispielsweise zügig einen anderen Stecheinsatz zur Verfügung zu haben, oder jediglich ein Halteelement zu tauschen und den Stecheinsatz an dem ausgetauschten Halteelement zu montieren. Dies kann beispielsweise notwendig sein, wenn der lichte Abstand zwischen den verschiedenen Stecheinsätzen verändert werden soll, da dann ein Halteelement mit einer anderen Breite von Vorteil sein kann.

Die Halteelemente sind vorzugsweise derart ausgebildet, daß die Schneidplatten von der Zustellrichtung her in das Halteelement einschiebbar sind.

Besonders bevorzugt ist eine Ausführungsform, bei der der Schneidplattenhalter dafür vorgesehen ist, die Stecheinsätze in axialer Richtung bzw. in Längsrichtung in mindestens zwei Positionen zu halten. Mit axialer Richtung ist die axiale Richtung bezogen auf das sich drehende Werkstück, also die Richtung der Werkstückachse, gemeint. Durch diese Maßnahme kann der lichte Abstand zwischen zwei benachbarten Stecheinsätzen im Schneidplattenhalter variiert werden. Besonders bevorzugt ist dabei eine Ausführungsform, bei der die Stecheinsätze im wesentlichen kontinuierlich in axialer Richtung variiert werden können, so daß sie in nahezu jeder Position sicher fixiert bzw. gehalten werden können. Es versteht sich, daß eine solche Variabilität nicht mit einer Schraubverbindung des Stecheinsatzes mit dem Halteelement bzw. dem Schneidplattenhalter verwirklichbar ist. Eine bevorzugte Ausführungsform sieht daher eine Klemmvorrichtung zur Fixierung der Stecheinsätze in axialer Richtung vor. Mit Hilfe dieser Klemmvorrichtung kann, nachdem die Stecheinsätze justiert, das heißt sie sowohl in Vorschubrichtung als auch in axialer Richtung in die richtige Position gebracht worden sind, diese Position einfach und vor allen Dingen schnell fixiert werden.

Eine zweckmäßige Ausführungsform sieht vor, daß mindestens ein Distanzstück dafür vorgesehen ist, zwischen zwei Stecheinsätzen fixiert zu werden. Insbesondere dann, wenn nicht jeder Stecheinsatz einzeln an dem Halteelement bzw. im Schneidplattenhalter fixiert bzw. festgeklemmt werden soll, ist es von Vorteil, wenn zwischen zwei Stecheinsätze, deren lichter Abstand eine bestimmte Größe übersteigt, ein Distanzstück gesetzt wird. Durch die Klemmvorrichtung werden dann die Stecheinsätze an das Distanzstück geklemmt, so daß eine Art Sandwichklemmung entsteht. Die hochgenaue Justierung des lichten Abstandes zwischen den Steckeinsätzen erfolgt somit durch die Wahl der Dicke des Distanzstückes. Soll der lichte Abstand zwischen zwei Stecheinsätzen vergrößert werden, so ist die Verwendung eines anderen Distanzstückes oder alternativ dazu mehrerer Distanzstücke notwendig.

Bei einer besonders bevorzugten Ausführungsform sind die Halteelemente dafür vorgesehen, den Stecheinsatz im wesentlichen in drei Punkten zu stützen bzw. zu tragen. Der Stecheinsatz wird zunächst derart in das Halteelement eingesetzt, daß er an den drei Punkten die Halteelement berührt. Durch die drei Punkte ist die Position des Stecheinsatzes in Bezug auf das Halteelement genau vorgegeben. Die Fixier- bzw. Klemmeinrichtung fixiert den Stecheinsatz dann in genau dieser Position. Es versteht sich, daß die drei Punkte nicht tatsächlich Punkte sein müssen, sondern in der Regel exakt gearbeitete Teilflächen, vorzugsweise auf den Kantenflächen, darstellen. Das Halteelement stützt bzw. trägt den Stecheinsatz dann im wesentlichen an drei Teilflächen.

Für manche Anwendungsfälle kann es von Vorteil sein, daß jedes Halteelement eine Befestigungseinrichtung zum Fixieren eines Stecheinsatzes in bzw. am Halteelement aufweist. Eine solche Befestigungseinrichtung kann auch eine Schraubverbindung sein. Insbesondere dann, wenn größere Stückzahlen an Werkstücken gefertigt werden sollen, bevor beispielsweise der lichte Abstand zwischen den Stecheinsätzen variiert werden muß oder der lichte Abstand zwischen den Stecheinsätzen keine hochgenaue Präzision erfordert, kann die Fixierung jedes einzelnen Stecheinsatzes an dem Halteelement von Vorteil sein.

Es ist offensichtlich, daß nicht jede auf dem Markt erhältliche Stechplatte in dem erfindungsgemäßen Schneidplattenhalter zum Einsatz kommen kann.

Hinsichtlich der entsprechenden Stechplatte wird die der Erfindung zugrunde liegende Aufgabe dadurch gelöst, daß die Stechplatte eine Positionierungskerbe aufweist, die davor für vorgesehen ist, im in den Schneidplattenhalter eingesetzten Zustand mit einer Sicherungseinrichtung in Eingriff zu treten, wobei die Positionierungskerbe vorzugsweise im wesentlichen im Bereich einer Ausnehmung einer Kantenfläche angeordnet ist.

Die erfindungsgemäße Stechplatte weist ein Hauptteil sowie mindestens ein eine Schneidkante aufweisendes Schneidteil auf, wobei das zumindest eine Schneidteil eine im wesentlichen konstante Breite aufweist. Es versteht sich, daß auch ein Schneidteil, welches beispielsweise lediglich im Bereich der Schneidkante Abschrägungen aufweist, um gegebenenfalls eine günstigere Verteilung der Schnittkräfte zu erreichen, eine im wesentlichen konstante Breite hat. Die hier beschriebenen erfindungsgemäßen Schneidplatten können mit Vorteil auch in anderen Schneidplattenhaltern verwendet werden.

Besonders bevorzugt ist eine Schneidplatte, mit einer viereckigen Grundform und vier Schneidkanten.

In einer bevorzugten Ausführungsform weist die Stechplatte zwei Seitenflächen oder auch Hauptflächen sowie mehrere Kanten- bzw. Randflächen auf, wobei die Schneidkanten an den Kantenflächen angeordnet sind. Zudem weist die Stechplatte vorzugsweise an mindestens einem Seitenrand eine Einbuchtung bzw. Ausnehmung auf. Besonders bevorzugt ist dann eine Halteelement, welches einen der Ausnehmung der Stechplatte angepaßten Haltesitz aufweist. Dadurch kann die Stechplatte mit ihrer Ausnehmung auf den Haltesitz des Halteelements gesetzt werden, so daß sich "automatisch" die exakte Position des Stecheinsatzes in Bezug auf das Halteelement ergibt. Die Ausnehmungen können auf viele Arten verwirklicht werden, so können beispielsweise die Kantenflächen der Stechplatte an den Ausnehmungen konkav gekrümmt sein. Es versteht sich aber, daß die Kantenflächen nicht unbedingt gekrümmt sein müssen, sondern beispielsweise auch im wesentlichen V-förmig ausgebildet sein können.

Eine besondere Ausführungsform der Stechplatte sieht mindestens zwei Ausnehmungen vor. In diesem Fall weist das Halteelement einen Plattensitz mit nicht nur einer entsprechend geformten Fläche, sondern zwei Ausbuchtungen auf, die an die Ausnehmungen der Stechplatte angepaßt sind. So ist es möglich, die Stechplatte noch genauer in das Halteelement einzusetzen, da nun Halteelement und Stechplatte an zwei Flächen aufeinander abgestimmt in Eingriff treten.

Besonders bevorzugt weist das Hauptteil der Stechplatte eine größere Breite auf als das zumindest eine Schneidteil. Durch die Variation der Breite des Hauptteiles kann der lichte Abstand zwischen zwei benachbarten Schneidplatten ohne Verwendung eines Distanzstückes variiert werden, ohne daß sich die Breite des Schneidteiles und damit die Breite der zu schneidenden Nut verändert. Es versteht sich, daß das Schneidteil nicht unbedingt zentrisch auf dem Hauptteil aufsitzen muß. Vielmehr kann das Schneidteil z. B. auch derart an dem Hauptteil angeordnet sein, daß auf einer Seite der Stechplatte die Fläche des Hauptteils und die Fläche des Schneidteils in einer Ebene liegen, während auf der anderen Seite der Stechplatte die Fläche des Schneidteiles und die Fläche des Hauptteiles in parallelen Ebenen liegen, so daß beim Übergang vom Hauptteil zum Schneidteil eine Stufe entsteht.

Die Stechplatte besitzt vorzugsweise eine Schneidkante mit einer Spanfläche und einer Freifläche, wobei Spanfläche und Freifläche einen Winkel α einschließen, der kleiner als 90° ist.

Besonders bevorzugt weist die Schneidkante eine Fase auf. Zusätzlich kann am Ende der Spanfläche ein konkav gekrümmter Abschnitt vorgesehen sein, der die Spanformung und den Spanfluß begünstigt.

Besonders bevorzugt ist die Stechplatte derart ausgebildet, daß sie im in den Schneidplattenhalter eingesetzten Zustand derart orientiert ist, daß sich ein positiver Spanwinkel bzw. Anstellwinkel während des Trennverfahrens ergibt.

In einer besonders bevorzugten Ausführungsform ist eine Sicherungseinrichtung vorgesehen, die eine Stechplatte bzw. ein Drehwerkzeug und/oder ein Distanzstück im Werkzeugsitz sichert, wobei die Sicherungseinrichtung ein elastisches Element aufweist, welches derart angeordnet ist, daß ein Drehwerkzeug oder ein Distanzstück nur unter Ausübung einer Kraft auf das elastische Element in den Werkzeugsitz eingesetzt oder/und aus diesem herausgenommen werden kann. Dadurch ist gewährleistet, daß der Schneidplattenhalter in der Lage ist, eine Stechplatte bzw. ein Drehwerkzeug und/oder ein Distanzstück in dem Werkzeugsitz derart zu halten, daß zwar eine axiale Positionierung bzw. Justierung des Drehwerkzeugs oder des Distanzstücks leicht möglich ist, aber ein versehentliches Herausfallen oder Herausrutschen des Drehwerkzeuges und/oder des Distanzstücks aus dem Werkzeugsitz des Schneidplattenhalters verhindert wird. Die Schneidplatte bzw. das Distanzstück wird daher unter Ausübung einer Kraft in den Werkzeugsitz des Schneidplattenhalters eingesetzt. Je nach Ausführungsform der Schneidplatte bzw. des Drehwerkzeugs kann im eingesetzten Zustand nun entweder das elastische Element auf das Drehwerkzeug bzw. das Distanzstück eine Kraft ausüben, so daß dieses im wesentlichen aufgrund der erhöhten Reibkraft nicht aus dem Werkzeugsitz herausfallen kann, oder die Sicherungseinrichtung kann in eine Positionierungskerbe der Schneidplatte bzw. des Distanzstücks eingreifen bzw. einrasten, so daß die Schneidplatte bzw. das Distanzstück nur unter Ausübung einer Kraft auf das elastische Element aus dem Werkzeugsitz entrastet und dann entfernt werden kann. Es versteht sich, daß eine solche erfindungsgemäße Sicherungseinrichtung mit Vorteil bei allen Schneidplattenhaltern mit mindestens einem Werkzeugsitz für ein Drehwerkzeug oder ein Distanzstück verwendet werden kann.

Besonders bevorzugt ist eine Ausführungsform, bei der das elastische Element eine Feder aufweist. Dabei weist die Sicherungseinrichtung vorzugsweise eine Hülse auf, in der das elastische Element angeordnet ist.

Eine besonders zweckmäßige Ausführungsform der Sicherungseinrichtung sieht vor, daß ein Kontaktelement vorhanden ist, welches dafür vorgesehen ist, mit einem Drehwerkzeug oder einem Distanzstück in Eingriff zu treten, wenn dieses in den Werkzeugsitz eingesetzt ist. Das Kontaktelement kann dann in der Materialwahl und in der Formgestaltung leicht an Material und Form des Drehwerkzeugs bzw. des Distanzstückes oder gegebenenfalls der Positionierungskerbe angepaßt werden. Beim Einsetzen des Drehwerkzeugs oder des Distanzstücks in den Werkzeugsitz kommt dann das Drehwerkzeug oder das Distanzstück mit dem Kontaktelement in Berührung. Das Kontaktelement, das mit dem elastischen Element verbunden ist, wird dann gegen die Federkraft des elastischen Elements aus seiner Ruhelage gedrückt.

Dabei ist vorzugsweise das Kontaktelement an der dem Werkzeugsitz zugewandten Seite des elastischen Elements innerhalb der Hülse angeordnet. Zweckmäßig ist es dann, wenn die Hülse sich an ihrem dem Werkzeugsitz zugewandten Ende zumindest soweit verjüngt, daß das Kontaktelement nicht völlig an dem dem Werkzeugsitz zugewandten Ende der Hülse aus dieser heraustreten kann. Mit anderen Worten weist die Hülse an ihrem einen Ende eine Anschlag auf, so daß das Kontaktelement, wenn weder Drehwerkzeug noch Distanzstück in dem Plattensitz eingesetzt sind, von dem elastischen Element gegen den Anschlag gepreßt wird. Beim Einsetzen des Drehwerkzeugs bzw. des Distanzstücks wird dann das Kontaktelement gegen die Federkraft ein wenig in die Hülse hinein und von dem Anschlag weg gedrückt. Im eingesetzten Zustand übt dann das elastische Element über das Kontaktelement eine Kraft auf das Drehwerkzeug bzw. das Distanzstück aus, so daß dieses nicht aus dem Werkzeugsitz herausfallen kann.

Mit Vorteil ist das Kontaktelement um mindestens eine Achse dreh- oder schwenkbar. Dies erlaubt leicht eine axiale Justierung, während gleichzeitig eine Sicherung gegenüber Herausfallen des Drehwerkzeugs bzw. des Distanzstücks aus dem Schneidplattenhalter bzw. dem Halteelement gewährleistet ist. Das Kontaktelement kann beispielsweise eine Kugel sein, die durch die Kraft der Feder gegen das Drehwerkzeug bzw. das Distanzstück gedrückt wird und innerhalb der Hülse um ihre eigene Achse gedreht werden kann.

Für manche Anwendungsfälle kann es von Vorteil sein, wenn eine Justiereinrichtung vorgesehen ist, mit der die Kraft, die während des Einsetzens oder/und während des Herausnehmens des Drehwerkzeugs und/oder des Distanzstücks in bzw. aus dem Werkzeugsitz auf das elastische Element ausgeübt werden muß, eingestellt werden kann. Dadurch ist es möglich, eine dem Anwendungsfall angepaßte Haltekraft der Sicherungseinrichtung einzustellen.

Bei einem besonders bevorzugten Schrieidplattenhalter sind mehrere Sicherungseinrichtungen vorgesehen. Mit Vorteil ist jedem aufzunehmenden Drehwerkzeug und/oder jedem aufzunehmenden Distanzstück eine Sicherungseinrichtung zugeordnet. Dadurch ist gewährleistet, daß jedes einzelne Distanzstück bzw. jedes einzelne Drehwerkzeug in dem Schneidplattenhalter bzw. dem Halteelement sicher gehalten werden kann.

Wie bereits erwähnt, ist es möglich, das Drehwerkzeug bzw. das Distanzstück in dem Schneidplattenhalter allein aufgrund der von dem elastischen Element über das Kontaktelement auf das Distanzstück bzw. das Drehwerkzeug ausgeübten Kraft zu halten.

Besonders bevorzugt ist jedoch eine Ausführungsform, bei der das Distanzstück und/oder die Stechplatte eine Positionierungskerbe aufweist, die dafür vorgesehen ist, mit einer Sicherungseinrichtung in Eingriff zu treten. Beim Einsetzen des Drehwerkzeugs bzw. des Distanzstücks in den Werkzeugsitz des Schneidplattenhalters wird dann zunächst das Kontaktelement auf das elastische Element gedrückt, so daß dieses zusammengedrückt wird. Dabei tritt das Kontaktelement mit der Außenfläche des Drehwerkzeugs bzw. des Distanzstücks in Eingriff. In dem Moment, in dem das Distanzstück bzw. das Drehwerkzeug seinen richtigen Sitz in dem Schneidplattenhalter eingenommen hat, erreicht das Kontaktelement die Positionierungskerbe des Distanzstücks bzw. des Drehwerkzeugs, so daß sich das elastische Element zumindest zum Teil wieder entspannen kann und das Kontaktelement in die Positionierungskerbe eingreift. Mit anderen Worten rastet das Kontaktelement in die Positionierungskerbe ein. Soll nun das Drehwerkzeug oder das Distanzstück wieder aus dem Werkzeugsitz des Schneidplattenhalters entfernt werden, so muß das elastische Element zunächst wieder zusammengedrückt werden, so daß das Kontaktelement aus der Positionierungskerbe des Distanzstücks bzw. des Drehwerkzeugs treten kann.

Das Drehwerkzeug bzw. die Stechplatte besteht erfindungsgemäß aus einem Hauptteil sowie mindestens einem, eine Schneidkante aufweisenden, Schneidteil, wobei die Stechplatte ebenfalls eine Positionierungskerbe aufweist, die dafür vorgesehen ist, im in den Stechplattenhalter eingesetzten Zustand mit einer Sicherungseinrichtung in Eingriff zu treten.

Die Positionierungskerbe ist mit Vorteil im wesentlichen im Bereich einer Ausnehmung einer Seitenfläche angeordnet.

Besonders bevorzugt ist eine Ausführungsform der Stechplatte, die mehrere, vorzugsweise vier, Schneidkanten aufweist, wobei jeder Schneidkante eine Positionierungskerbe zugeordnet ist. Dies ermöglicht ein sicheres Halten der Schneidplatte im Schneidplattenhalter bei jeder vorgesehenen Orientierung der Schneidplatte.

Bei einer besonders bevorzugten Ausführungsform der Schneidplatte sind die Ausnehmungen im wesentlichen V-förmig ausgebildet, wobei nur an einem V-Schenkel eine Positionierungskerbe angeordnet ist. Diese Anordnung der Positionierungskerbe hat den Vorteil, daß ein versehentliches falsches Einlegen der Schneidplatte in den Plattensitz verhindert wird, da sich dann an der entsprechenden Stelle, an der sich das Kontaktelement der Sicherungseinrichtung befindet, keine Positionierungskerbe befindet. Demzufolge wird bei geeigneter Ausbildung der Stechplatte die Stechplatte nur dann sicher im Plattensitz gehalten, wenn die Schneidplatte so angeordnet ist, daß die Schneidkante in der richtigen Orientierung angeordnet ist.

Weitere Vorteile, Merkmale und Anwendungsmöglichkeiten der vorliegenden Erfindung werden deutlich an Hand der folgenden Beschreibung bevorzugter Ausführungsformen sowie der dazu gehörigen Figuren.

Es zeigen:
- Figur 1: eine perspektivische Ansicht einer erfindungsgemäßen Stechplatte,
- Figur 2: eine perspektivische Ansicht einer in einem Halteelement montierten Stechplatte,
- Figur 3: eine alternative Ausführungsform des Halteelements von Figur 2,
- Figur 4: eine perspektivische Ansicht einer weiteren Ausführungsform des Halteelements,
- Figur 5: eine perspektivische Ansicht eines Distanzstückes,
- Figur 6: eine perspektivische Ansicht eines Halteelements mit eingesetztem Distanzstück und Stechplatte,
- Figur 7: eine perspektivische Ansicht einer Klemmvorrichtung,
- Figur 8: eine perspektivische Ansicht des erfindungsgemäßen Schneidplattenhalters in geöffnetem Zustand,
- Figur 9: eine perspektivische Ansicht des Schneidplattenhalters in einer ersten Konfiguration,
- Figur 10: eine perspektivische Ansicht eines Schneidplattenhalters in einer zweiten Konfiguration,
- Figur 11: eine Schnittansicht eines erfindungsgemäßen Halteelements mit Sicherungseinrichtung,
- Figur 12: eine perspektivische Ansicht eines Halteelements mit Sicherungseinrichtung mit aufgesetztem Distanzstück,
- Figur 13: eine Seitenansicht eines erfindungsgemäßen Halteelements mit Sicherungseinrichtung und aufgesetzter erfindungsgemäßer Stechplatte,
- Figur 14: eine perspektivische Ansicht einer weiteren Ausführungsform der Stechplatte,
- Figur 15: eine Seitenansicht einer alternativen Ausführungsform eines erfindungsgemäßen Halteelements mit Sicherungseinrichtung und aufgesetzter erfindungsgemäßer Stechplatte und
- Figur 16: eine perspektivische Ansicht der Ausführungsform von Figur 15.

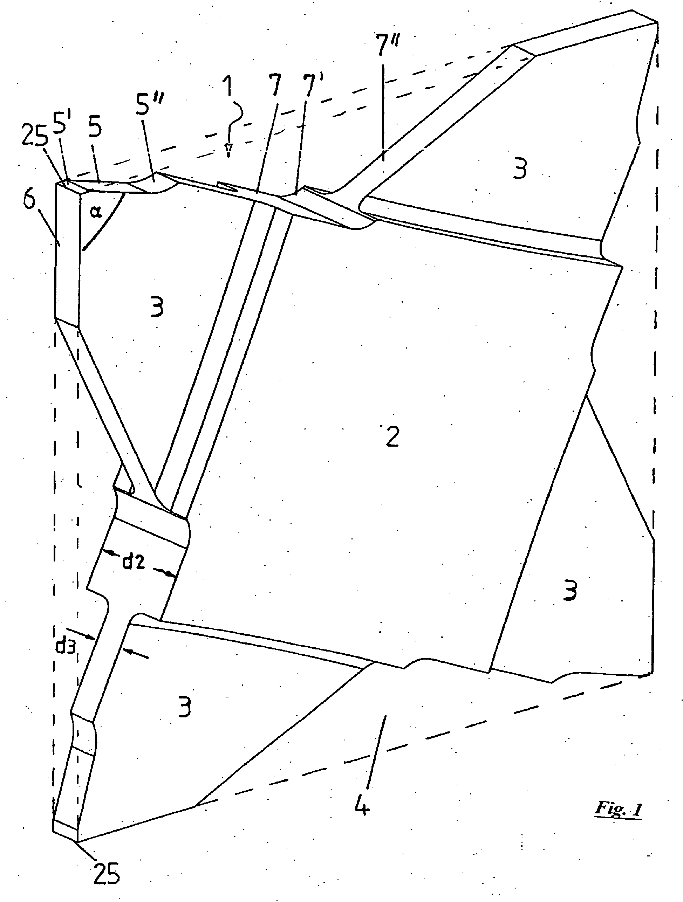

In Figur 1 ist eine Ausführungsform einer erfindungsgemäßen Stechplatte 1 dargestellt. Die mit der Bezugszahl 1 versehene Stechplatte besitzt eine quadratische Grundform, die durch die gestrichelten Linien angedeutet ist. Sie besteht aus einem Hauptteil 2 sowie vier Schneidteilen 3. Die Schneidteile 3 haben eine konstante Breite d3, welche geringer als die Breite d2 des Hauptteiles 2 ist. Die Stechplatte 1 hat vier Ausnehmungen bzw. prismatische Kammern 4. Diese prismatischen Kammern bzw. Ausnehmungen 4 erstrecken sich bis zum Hauptteil 2. Die prismatischen Kammern 4 werden durch die Kantenflächen 7, 7' und 7" begrenzt. Deutlich zu erkennen ist, daß die Fläche 7 einen schmalen Abschnitt, dessen Breite der Breite d3 des Schneidteiles entspricht, und einen etwas breiteren Teil, dessen Breite der Breite d2 des Hauptteiles entspricht, aufweist. Der mit der Bezugszahl 7" versehene Teil ist der Schneidteilrücken. Durch die abgerundete Fläche 7' werden die Flächen 7 und 7" verbunden.

Deutlich zu erkennen ist auch, daß sich die prismatischen Kammern 4 bis in das Hauptteil 2 hineinerstrecken. Die prismatischen Kammern sind im wesentlichen V-förmig, wobei die Schenkel der V-Form, also die Flächen 7 und 7 " vorzugsweise - wie bei der gezeigten Ausführungsform der Fall - etwa um einen Winkel von 25° nach innen geneigt sind. In der gezeigten Ausführungsform schließen die Flächen 6 und 7" ebenfalls einen Winkel von etwa 25° ein. Es ist aber für manche Anwendungsfälle denkbar, die Freifläche 6 gegenüber der Grundform abzuwinkeln, ohne daß sich an der prismatischen Kammer etwas ändert.

Am Schneidteil 3 ist eine Schneidkante 25 angeordnet. An diese grenzt eine Spanfläche (5, 5', 5") und eine Freifläche 6. Die Spanfläche selbst ist wiederum unterteilt in die eigentliche Spanfläche 5, die Fase 5' und die gerundete Fläche 5". Die gerundete Fläche 5" dient der Spanformung und dem Spanfluß. Spanfläche 5 und Freifläche 6 bilden einen Winkel α von weniger als 90°.

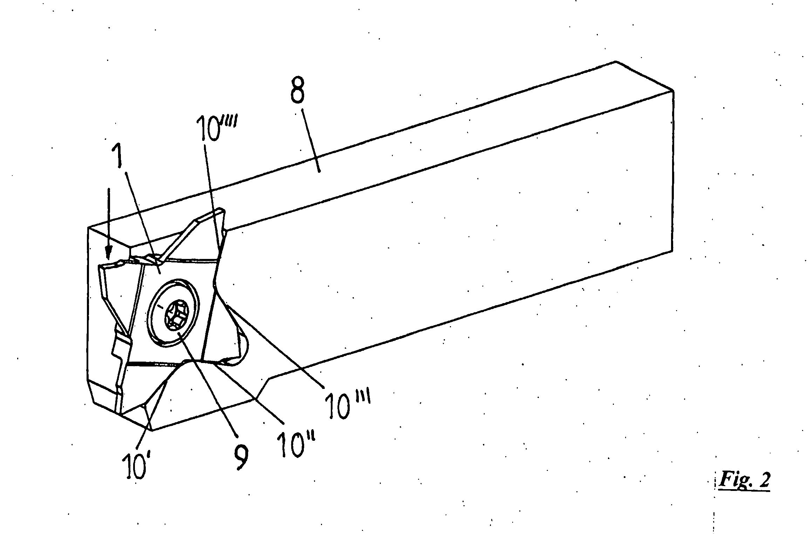

In Figur 2 ist eine erfindungsgemäße Stechplatte in einem Halteelement eingesetzt. Die Stechplatte weist gegenüber der in Figur 1 gezeigten einige Unterschiede auf. So ist beispielsweise in dem Hauptteil eine im wesentlichen zentrisch verlaufende Durchgangsbohrung vorhanden, so daß mit Hilfe der Schraube 9 der Stecheinsatz 1 an dem Halteelement 8 befestigt werden kann. Deutlich zu erkennen ist auch, daß in der hier gezeigten Ausführungsform die Schneidteile 3, die eine geringere Breite d3 als die Breite des Hauptteiles d2 aufweisen, nicht zentrisch aufgesetzt sind, so daß der Hauptteil 2 auf der einen Seite des Stecheinsatzes stärker über die Schneidteile 3 hervorsteht als auf der anderen Seite.

Das Halteelement weist den Ausnehmungen der Schneidplatte entsprechende Ausbuchtungen auf, die den Plattensitz definieren. Die Ausnehmungen sind so ausgebildet, daß die Schneidplatte an den Punkten 10', 10" und 10''' auf das Halteelement aufsitzt. Durch diese Dreipunktauflage ist die Position der Schneidplatte in der Ebene der Schneidplatte in Bezug auf das Halteelement 8 eindeutig bestimmt. An dieser Stelle soll darauf hingewiesen werden, daß der Schneid- bzw. Stecheinsatz im Prinzip auch an der Stelle 10"" das Halteelement berühren kann. Bei bestimmungsgemäßen Gebrauch wird jedoch während des Trennverfahrens eine Kraft auf die Stechplatte 10 in Pfeilrichtung ausgeübt, so daß die Stechplatte an der Stelle 10"" möglicherweise nicht mehr auf dem Halteelement aufliegt.

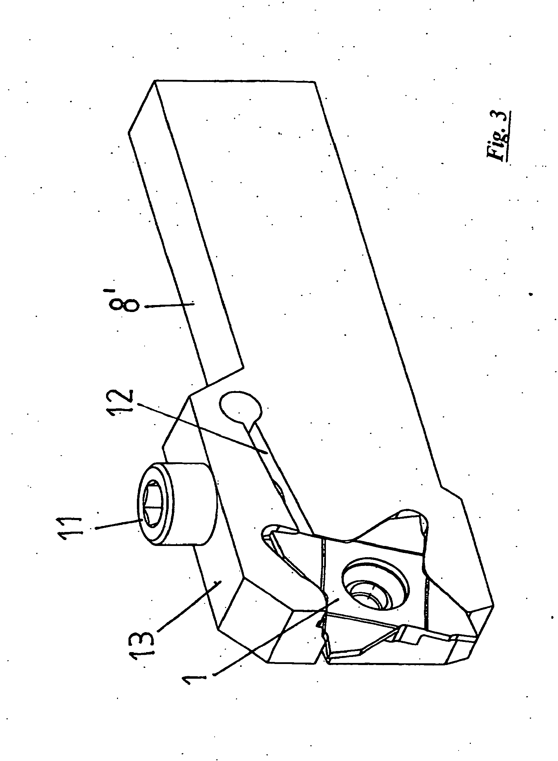

In der Figur 3 ist eine alternative Ausführungsform eines Halteelements 8' gezeigt. Auch hier wird die Stechplatte 1 auf Sitz und Lehne des Halteelements eingesetzt. Jedoch wird in dieser Ausführungsform die Stechplatte 1 nicht mit dem Halteelement verschraubt, das Halteelement weist vielmehr eine Art Klaue 13 auf, die aufgrund der Ausnehmung 12 gegenüber dem Werkzeugschaft des Halteelements 8', das Sitz und Lehne aufweist etwas bewegbar ist (Biegebalken), so daß mit Hilfe der Schraube 11 die Klaue 13 in Richtung des Schneideinsatzes 1 bewegt werden kann.

Bei dieser Ausführungsform wird also zunächst der Stecheinsatz 1 in das Halteelement 8' derart eingesetzt, daß der Stecheinsatz 1 an den besagten Punkten mit dem Halteelement in Berührung tritt. Danach wird die Klaue 13 mit Hilfe der Schraube 11 angezogen, so daß die Stechplatte 1 innerhalb des Halteelements 8' fixiert wird. Anstelle des Biegebalken kann auch eine vom Werkzeugschaft getrennte Pratze verwendet werden.

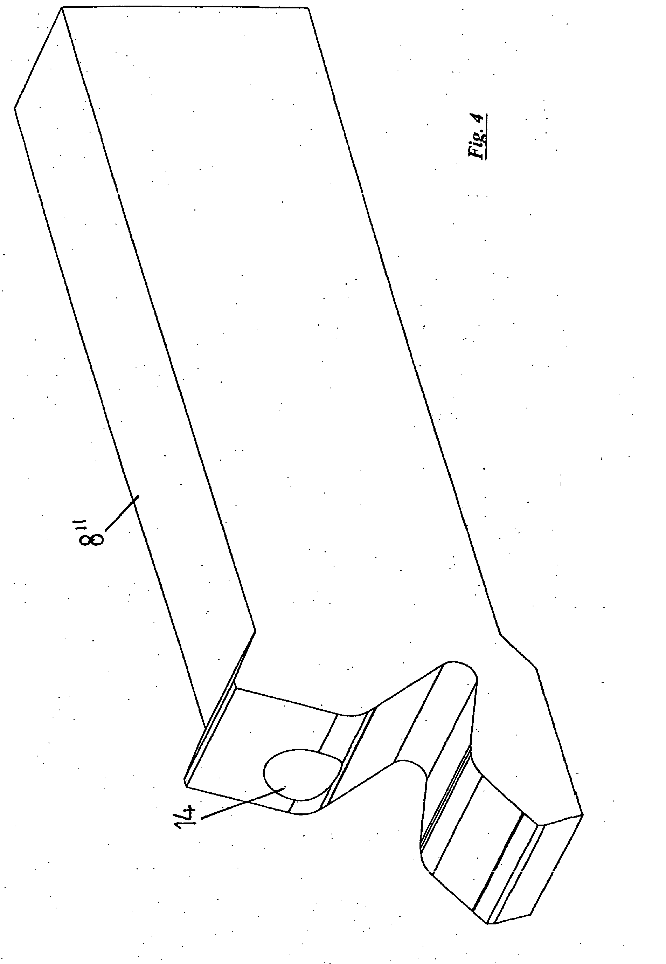

In Figur 4 ist eine dritte Ausführungsform eines Halteelements 8" gezeigt. Auch dieses Halteelement weist, ähnlich wie bei einem Stuhl, einen Sitz und eine Lehne auf. Sitz und Lehne sind vorzugsweise der Form der prismatischen Kammern 4 des Stecheinsatzes 1 nachgeformt. Das Halteelement 8" weist eine Funktionsöffnung 14 auf, deren Zweck weiter unten erläutert wird.

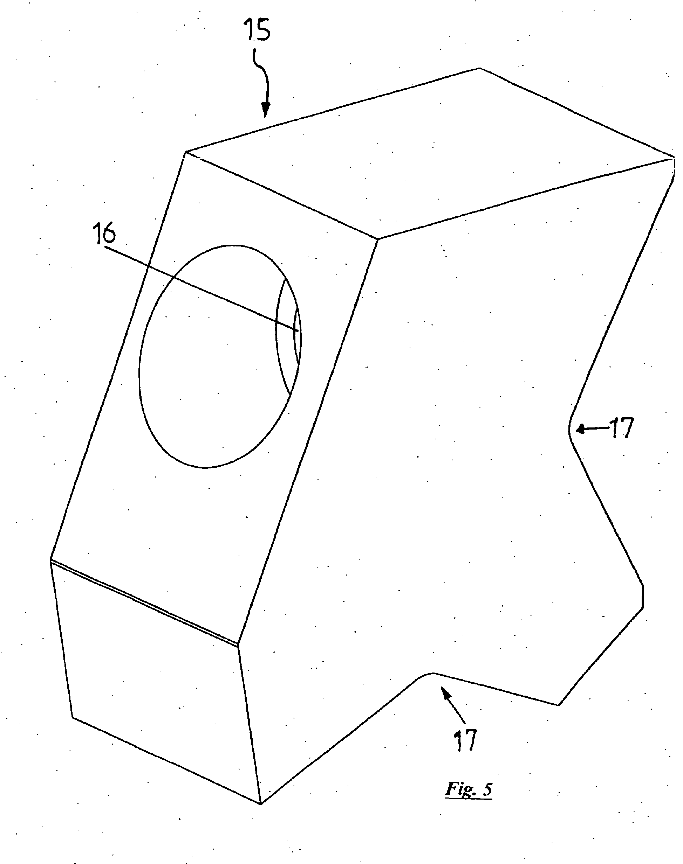

In Figur 5 ist in perspektivischer Ansicht eine Distanzstück 15 zu sehen. Dieses Distanzstück 15 weist ebenfalls zwei prismatische Kammern 17 auf, die derart geformt sind, daß das Distanzstück 15 formschlüssig auf dem Halteelement 8" gesetzt werden kann. Zudem weist das Distanzstück 15 ebenfalls eine Funktionsbohrung 16 auf, die weiter unten im Zusammenhang mit der Bohrung 14 des Halteelements 8" erklärt werden wird.

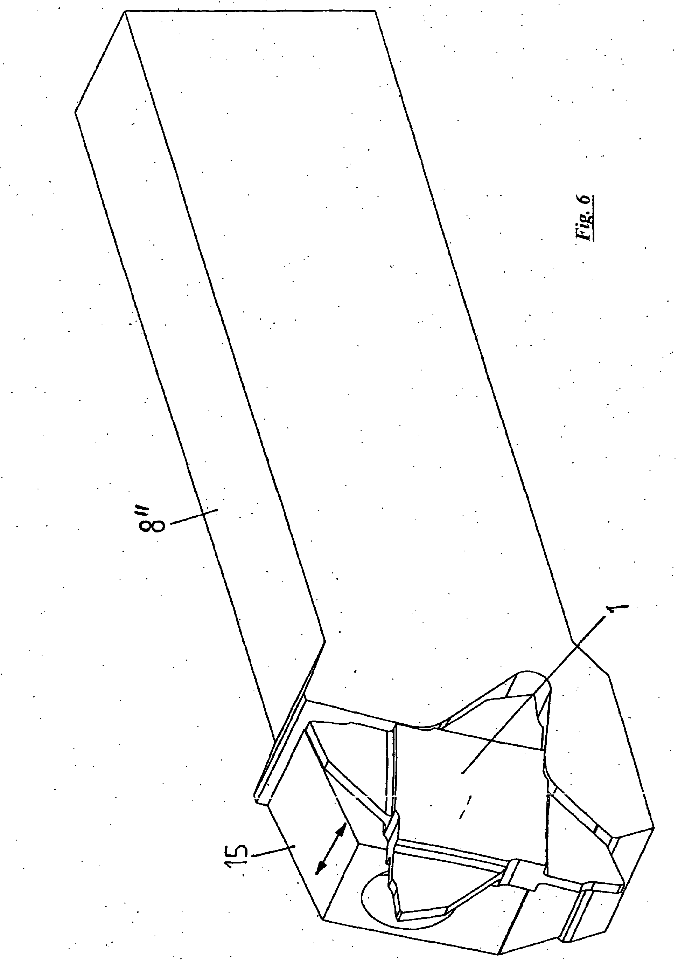

In Figur 6 ist erneut das Halteelement 8" gezeigt. In das Halteelement 8" sind hier das Distanzstück 15 und die Stechplatte 1 eingesetzt. Deutlich zu erkennen ist, daß die prismatischen Kammern, bzw. die Ausnehmungen 4 der Stechplatte 1 an die Form von Sitz und Lehne des Halteelements 8" angepaßt sind. Auch das Distanzstück 15 ist an die Form des Halteelement 8" angepaßt. In der gezeigten Ausführungsform sind die Funktionsbohrungen 16 bzw. 14 des Distanzstückes 15 bzw. des Halteelements 2" im wesentlichen "in Flucht". Dies heißt aber nicht, daß das Distanzstück 15 an dem Halteelement 8" festgeschraubt wird. Dies kann zwar für besondere Anwendungsfälle von Vorteil sein, im allgemeinen dient die Funktionsöffnung aber zum Beispiel einer groben Befestigung des Distanzstückes 15 an dem Halteelement 8". Unter einen groben Befestigung wird verstanden, daß das Distanzstück 15 derart an dem Halteelement 8" befestigt ist, daß zwar das Distanzstück 15 nicht vollends von dem Halteelement 8" entfernt werden kann, daß aber das Distanzstück 15 in Längsrichtung bzw. in axialer Richtung, die hier durch Pfeile angedeutet ist, zumindest begrenzt bewegbar ist.

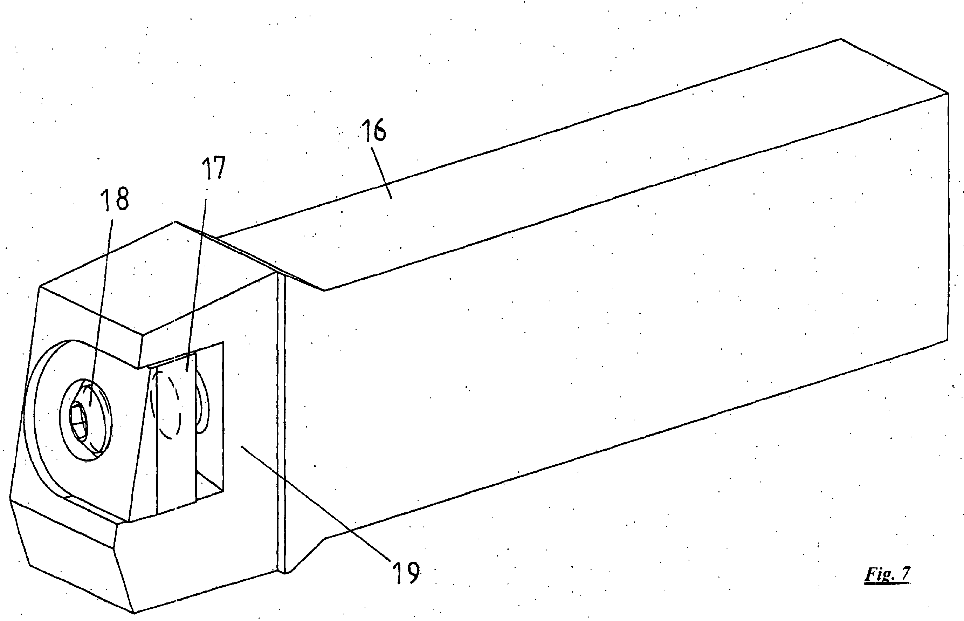

In Figur 7 ist die Klemmeinrichtung 16 gezeigt. Die Klemmeinrichtung 16 hat in dieser Ausführungsform eine ähnliche Grundform wie das Halteelement 8". Sie ist so gefertigt, daß die Klemmvorrichtung 16 an Stelle eines Halteelements 8" in dem Schneidplattenhalter verwendet werden kann. Die Klemmvorrichtung 16 weist einen Keil 17 auf, der mit Hilfe der Schraube 18 "verkeilt" werden kann. Durch Anziehen der Schraube 18 wird der Keil 17 derart bewegt, daß er sich aus dem Gehäuse 19 der Klemmvorrichtung 16 herausstreckt.

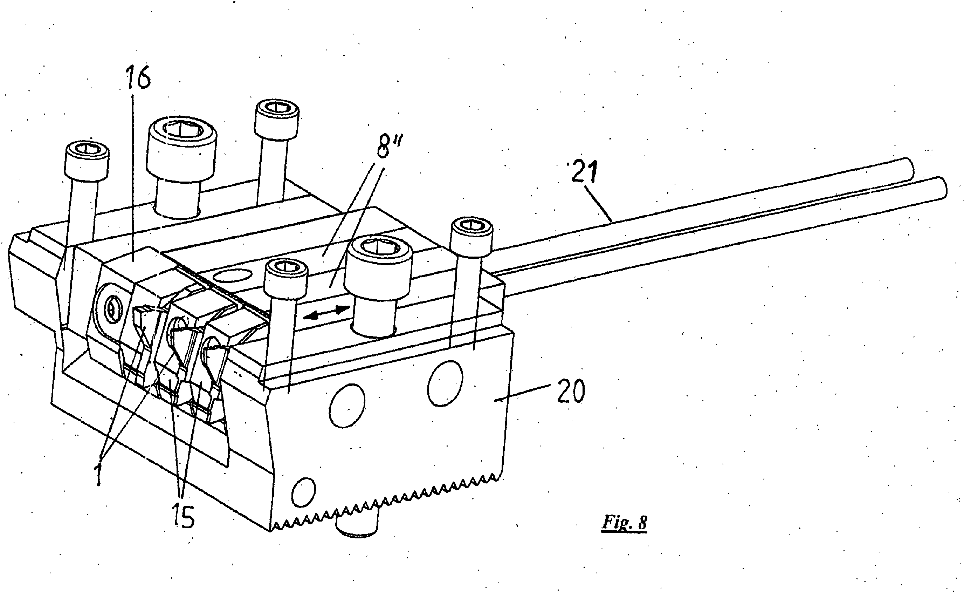

In den Figuren 8 bis 10 ist nun der eigentliche Schneidplattenhalter in verschiedenen Positionen gezeigt.

In Figur 8 ist der Schneidplattenhalter in einer geöffneten Position dargestellt. Der Schneidplattenhalter besteht aus einem Grundkörper 20. In diesen Grundkörper sind verschiedene Halteelemente 8" eingelegt. Die Einrichtungen 8" sind mit den Distanzstücken 15 und den Stecheinsätzen 1 bestückt. Die Halteelemente 8" können in Vorschubrichtung einzeln verstellt werden. Damit verbunden ist eine individuelle Einstellmöglichkeit der in den Halteelemente 8" sitzenden Stechplatten 1. Die Einstellung der Stechplatten in Längsrichtung bzw. axialer Richtung erfolgt mit Hilfe der Distanzstükke 15. So werden Distanzstücke 15 und Stechplatten 1 derart ausgewählt, daß sie aneinandergereiht den gewünschten lichten Abstand untereinander aufweisen. Zusätzlich ist die Klemmeinrichtung 16 in den Grundkörper 20 aufgenommen. Die mit der Bezugszahl 21 versehenen federbeiasiete Abstreiferstangen dienen hier dem Abstreifen von Spänen oder Spanringen und dem Halten der Distanzstücke 15. Sie sind aber im allgemeinen nicht unbedingt notwendig.

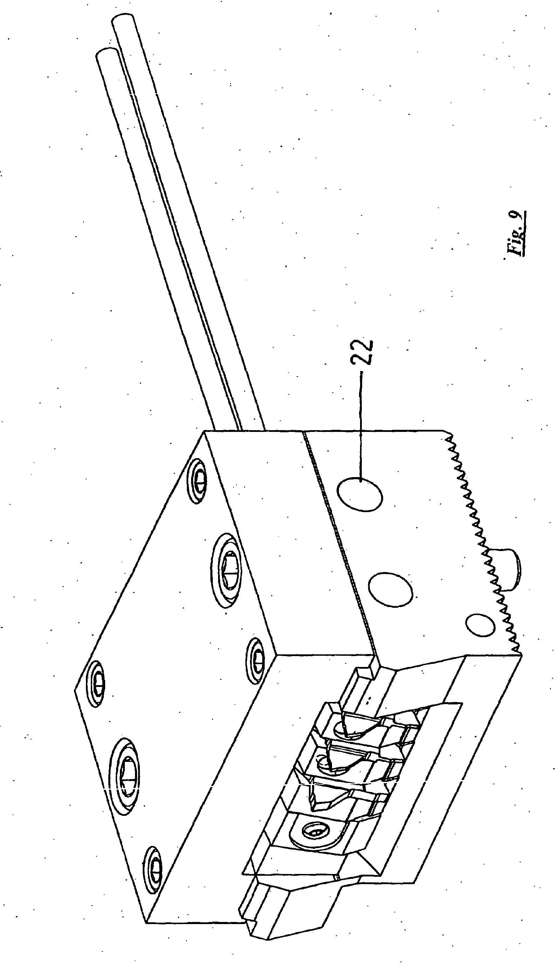

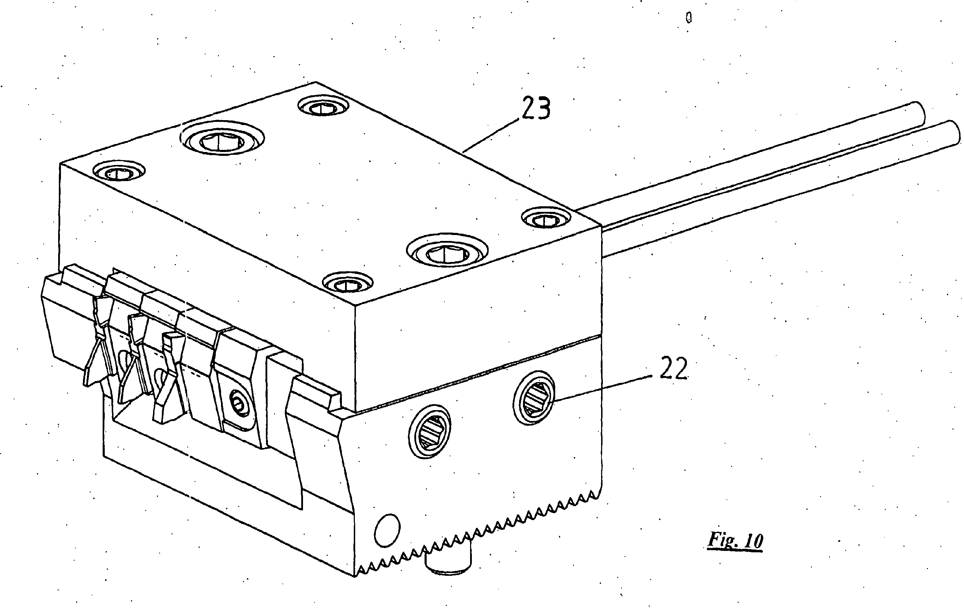

In den Figuren 9 und 10 ist der Schneidplattenhalter mit aufgesetztem Deckel 23 gezeigt. Es werden also zunächst die Halteelemente 8" bei geöffnetem Deckel 23 des Grundkörpers 20 eingelegt. Die einzelnen Stechplatten 1 werden dann ausgewählt und zusammen mit den entsprechenden Distanzstücken 15 in die Halteelemente 8" eingesetzt. Die Halteelemente können in Vorschubrichtung, wie in Figur 8 durch den Pfeil angedeutet wurde, eingestellt werden. Erst wenn die Schneidplatten sowohl in Vorschubrichtung als auch in axialer Richtung die richtige Position haben, werden die Stechplatten 1 und die Distanzstücke 15 mit Hilfe der Klemmvorrichtung 16 zusammengedrückt und fixiert. Schließlich werden die Halteelemente 8" durch die Klemmschrauben 22 aneinander gepreßt und justiert. Schließlich wird noch der Deckel 23 auf den Grundkörper 20 aufgesetzt und festgeschraubt. Die einzelnen Stechplatten 1 sind jetzt in der gewünschten Art und Weise fixiert.

Bei der gezeigten Ausführungsform werden mehrere Stechplatten 1 in Reihe mit Hilfe der Klemmvorrichtung 16 und den Distanzstücken 15 durch Reibschluß geklemmt aber auch durch die prismatische Form der Stechplatten 1 im Plattensitz gehalten. Durch die verstellbaren Halteelemente 8" kann für jede Stechplatte 1 eine individuelle Stechtiefe eingestellt werden. Die Distanzstücke werden durch federbelastete Schrauben mit den verstellbaren Haltern verbunden. Die verstellbaren Halter werden durch zwei im Block eingesetzte Schrauben und dem Deckel unabhängig von der Plattenklemmung fixiert.

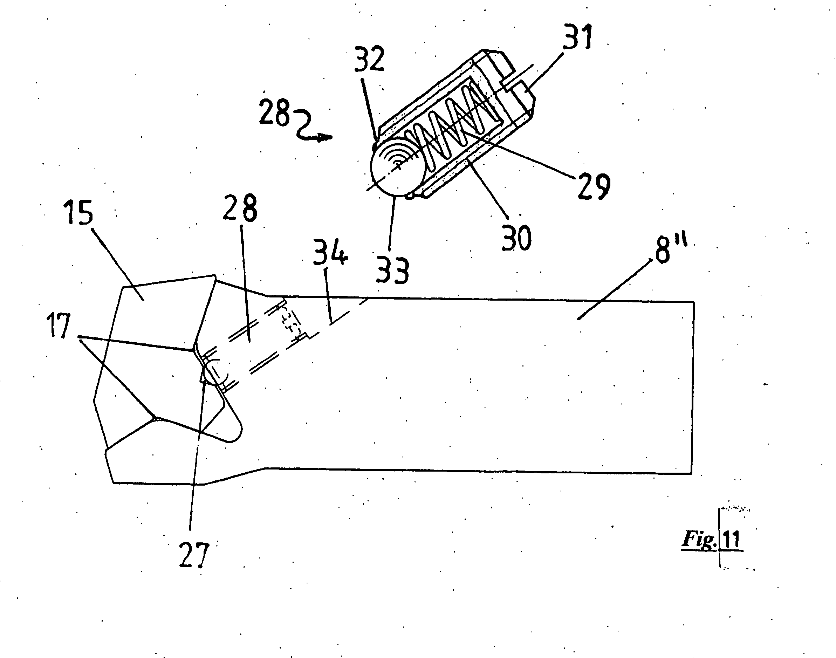

Wie bereits erwähnt, kann es, insbesondere bei einer Überkopfmontage, vorkommen, daß einzelne Distanzstücke 15 oder Stechplatten 1 aus dem Plattensitz herausfallen, bevor sie von der Klemmeinrichtung 16 fixiert wurden. Die erfindungsgemäße Sicherungseinrichtung 28 verhindert dies. Die Sicherungseinrichtung 28 ist unter anderem in Figur 11 abgebildet. Das Halteelement 8" weist hier eine Bohrung 34 auf, die sich bis zu dem Plattensitz erstreckt. In diese Bohrung 34 ist die Sicherungseinrichtung 28 eingesetzt bzw. eingeschraubt. Die Sicherungseinrichtung 28 besteht hier aus einer Hülse 30, in der ein Federelement 29 sowie ein als Kugel ausgebildetes Kontaktelement 33 aufgenommen sind. Die Hülse 30 ist an ihrem dem Plattensitz zugewandten Ende 32 verjüngt ausgebildet bzw. weist Anschläge 32 auf. Somit ist gewährleistet, daß das kugelförmige Kontaktelement 33 nicht aus der Hülse herausfallen kann. Die Sicherungseinrichtung 28 ist so angeordnet, daß sich das Kontaktelement 33 über die Bohrung 34 in den Plattensitz hinein erstreckt. Ebenfalls ist in Figur 11 ein in den Plattensitz eingesetztes Distanzstück 15 abgebildet. Das Distanzstück 15 weist zwei prismatische Kammern 17 auf, die derart ausgebildet sind, daß sie in etwa der Kontur des Plattensitzes des Halteelements 8" folgen. Deutlich zu erkennen ist, daß das Distanzstück 15 in dem eingesetzten Zustand eine Kraft auf das Kontaktelement 33 ausübt, so daß das kugelförmige Kontaktelement 33 gegen die Federkraft des elastischen Elements 29 etwas in die Bohrung 34 hineingedrückt wird. Im eingesetzten Zustand übt daher das Kontaktelement 33 aufgrund der gespannten Feder 29 eine Haltekraft auf das Distanzstück 15 aus, so daß dieses nicht aus dem Plattensitz herausfallen kann. In der hier gezeigten besonders bevorzugten Ausführungsform weist das Distanzstück 15 eine Ausnehmung bzw. Positionierungskerbe 27 auf, die derart angeordnet ist, daß im eingesetzten Zustand das Kontaktelement 33 in die Positionierungskerbe greift. Dadurch wird zwar die von dem Kontaktelement 33 auf das Distanzstück ausgeübte Kraft wieder etwas erniedrigt, da das Kontaktelement 33 nun wieder etwas weiter aus der Bohrung 34 in Richtung des Plattensitzes heraustreten kann, ein Herausnehmen des Distanzstückes aus dem Plattensitz ist jedoch nur möglich, wenn das kugelförmige Kontaktelement 33 erneut in die Bohrung 34 entgegen der Federkraft des elastischen Elements 29 hineingedrückt wird.

Diese Ausführungsform hat den Vorteil, daß das Distanzstück 15 nun leicht in Längsrichtung bzw. in axialer Richtung bewegt werden kann, ein versehentliches Herausfallen des Distanzstückes 15 aus dem Plattensitz aber durch das kugelförmige Kontaktelement 33 der Sicherungseinrichtung 28, das in die Positionierungskerbe 27 des Distanzstückes 15 eingreift, wirksam verhindert ist.

Die Sicherungseinrichtung 28 weist in der gezeigten Ausführungsform ein Außengewinde auf, das in ein Innengewinde der Bohrung 34 greift. Mit Hilfe des schraubenkopfartigen Kopfes 31 der Hülse 30 kann daher eingestellt werden, inwieweit das Sicherungselement 28 bzw. die Hülse 30 in die Bohrung 34 eingeschraubt werden soll. Dadurch kann die Haltekraft, die die Sicherungseinrichtung 28 bzw. das kugelförmige Kontaktelement 33 auf das Distanzstück 15 bzw. die Stechplatte 1 ausübt, eingestellt werden.

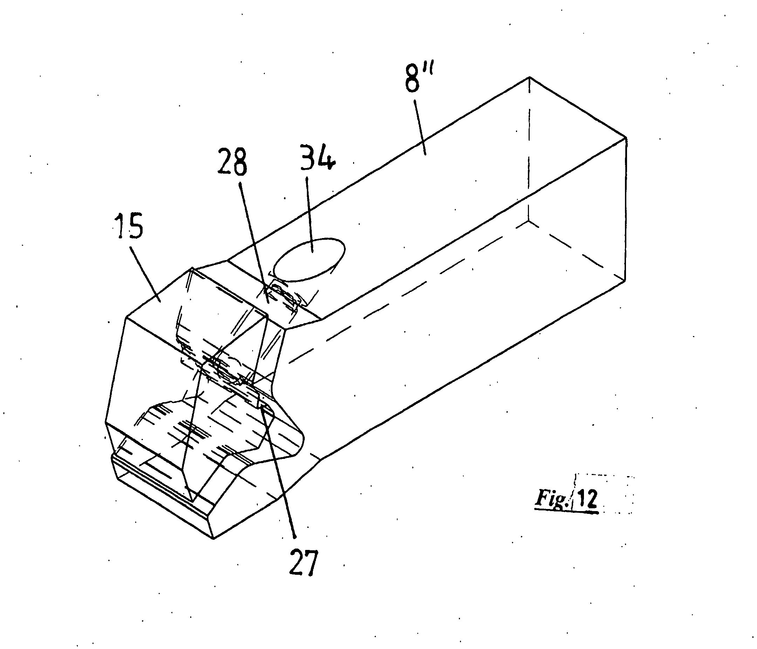

In Figur 12 ist eine perspektivische Ansicht eines Halteelements 8" mit aufgesetztem Distanzstück 15 gezeigt. Zur Verdeutlichung sind die inneren Teile, die in einer perspektivischen Ansicht normalerweise nicht sichtbar sind, durch gestrichelte Linien dargestellt. Deutlich zu erkennen ist, daß sich die Bohrung 34 in Richtung des Plattensitzes bzw. des Distanzstücks 15 erstreckt. Innerhalb der Bohrung 34 ist die Sicherungseinrichtung 28 eingesetzt, die mit ihrem Kontaktelement 33 in die Positionierungskerbe 27 des Distanzstücks 15 eingreift. In der gezeigten Ausführungsform erstreckt sich die Positionierungskerbe 27 in Längsrichtung über die gesamte Breite des Distanzstücks 15.

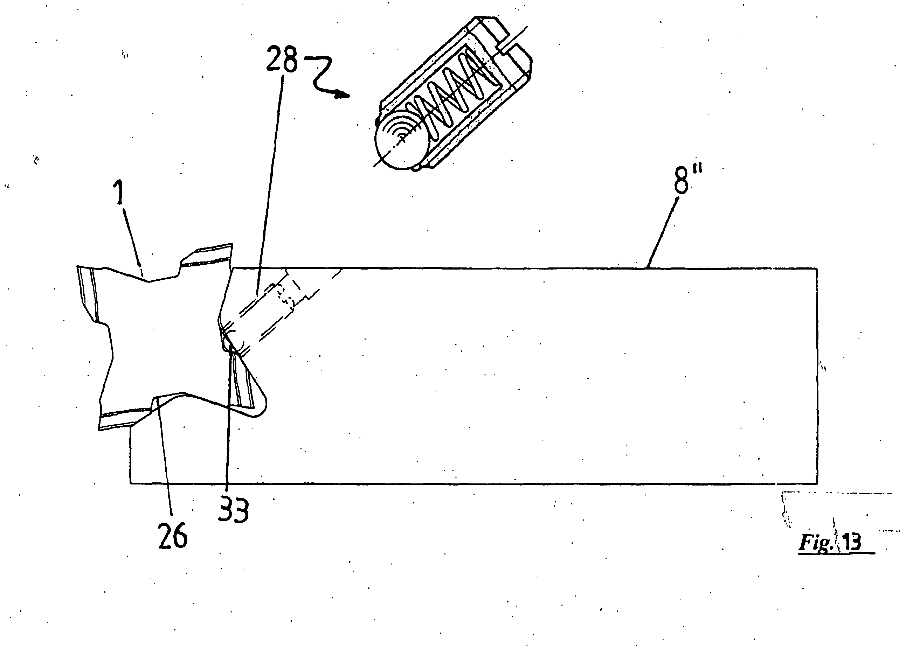

In Figur 13 ist ein Halteelement 8" mit der erfindungsgemäßen Sicherungseinrichtung 28 gezeigt, wobei in dem Plattensitz des Halteelements 8" eine Stechplatte 1 angeordnet ist. Auch die Stechplatte 1 weist eine Positionierungskerbe 26 auf, die dafür vorgesehen ist, daß das Kontaktelement 33 der Sicherungseinrichtung 28 in diese Positionierungskerbe 26 eingreift. Auch hier ist eine leichte axiale Verstellbarkeit der Stechplatte gewährleistet, während ein versehentliches Herausfallen oder Herausrutschen der Stechplatte 1 aus dem Plattensitz des Halteelements 8" verhindert wird. In der hier gezeigten Ausführungsform übt das Kontaktelement 33 in der gezeigten Position nur eine sehr geringe Haltekraft auf. Soll die Stechplatte 1 aus dem Plattensitz des Halteelements 8" entfernt werden, so muß jedoch das kugelförmige Kontaktelement 33 gegen die Federkraft des elastischen Elements 29 in die Bohrung 34 hineingedrückt werden, um das Schneidteil aus dem Plattensitz herausnehmen zu können.

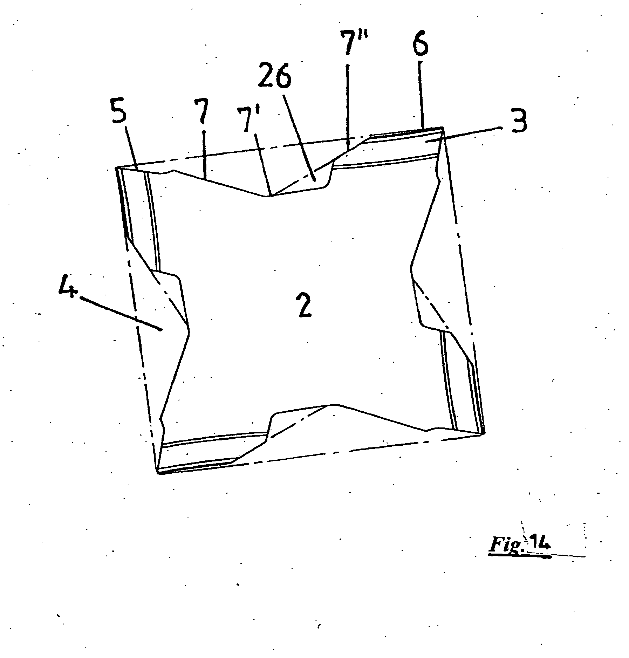

Die Stechplatte 1 ist in Figur 14 noch einmal vergrößert dargestellt. Diese Darstellung entspricht im wesentlichen der Darstellung von Figur 1, wobei hier die vier Schneidteile 3 kleiner ausgebildet sind. Auch hier sind vier prismatische Kammern 4 vorhanden, die durch die Kantenflächen 7, 7' und 7" begrenzt werden. Die Positionierungskerbe 26 ist im Bereich des Schneidteilrückens 7" angeordnet.

Diese Anordnung der Positionierungskerbe 26 hat zusätzlich den Vorteil, daß bei einem versehentlichen Falschmontieren, das heißt einem Einsetzen der Stechplatte 1 in einer Orientierung, in der nicht die vorgesehene Schneidkante 25, sondern die Freifläche 6 in Schnittrichtung orientiert ist, die Stechplatte 1 nicht "einrastet", da dann die Positionierungskerbe 26 nicht mit der Bohrung 34 "in Flucht" gebracht werden kann, so daß die Sicherungseinrichtung 28 bzw. das kugelförmige Kontaktelement 33 nicht mit der Positionierungskerbe 26 in Eingriff treten kann und ein sicheres Halten der Stechpiatte 1 innerhalb des Plattensitzes des Halteelements 8" nicht gewährleistet ist. In diesem Fall wird bei der manuellen Bestückung sofort festgestellt, daß die Stechplatte 1 nicht in der richtigen Orientierung angeordnet ist, so daß der Fehler sofort korrigiert werden kann. Die Funktions- und Prozeßsicherheit des Stechsystems wird dadurch erheblich verbessert.

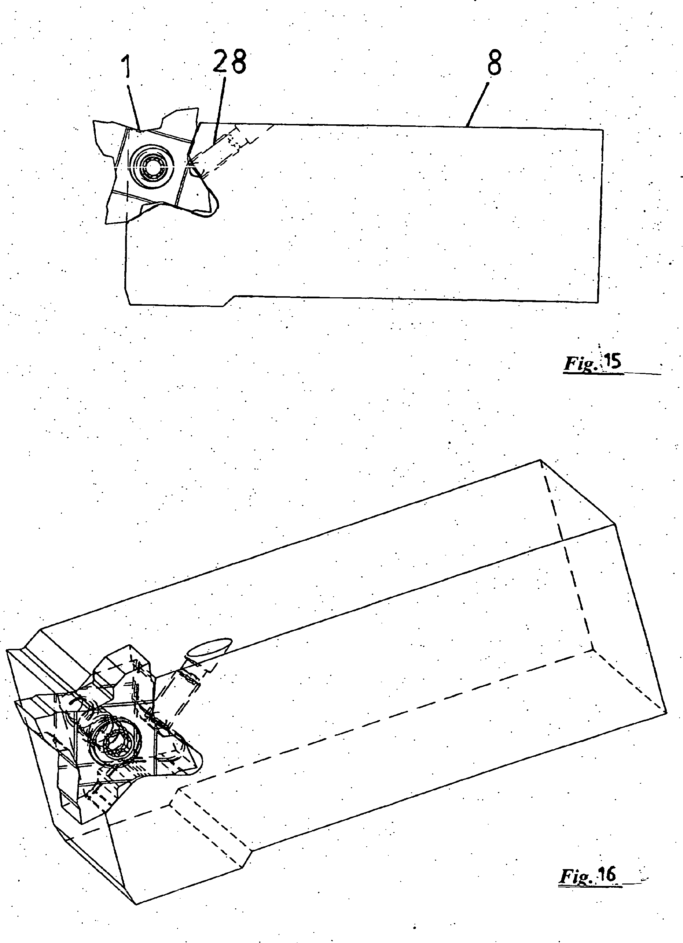

In den Figuren 15 und 16 ist eine alternative Ausführungsform des erfindungsgemäßen Schneidplattenhalters mit Sicherungseinrichtung dargestellt. Dieser unterscheidet sich von den Ausführungsformen der vorherigen Figuren lediglich dadurch, daß das Halteelement 8 hier nicht mit einer Klemmeinrichtung versehen ist, sondern die Stechplatte mit Hilfe einer Schraube an dem Halteelement befestigt wird. Dementsprechend weist die in den Figuren 15 und 16 gezeigte Ausführungsform der Stechplatte eine in etwa im Zentrum liegende Durchgangsbohrung auf, die zum Befestigen der Stechplatte an dem Halteelement verwendet wird. Auch hier ist die Montage der Stechplatte an dem Halteelement aufgrund der Sicherungseinrichtung 28 deutlich vereinfacht. Die Stechplatte 1 muß lediglich in den Plattensitz eingesetzt werden, bis die Sicherungseinrichtung 28 "einrastet". Im Anschluß daran kann die Stechplatte an dem Halteelement 8 festgeschraubt werden.

Durch den erfindungsgemäßen Schneidplattenhalter können in einem Arbeitschritt mit einer Drehmaschine gleichzeitig mehrere Drehwerkzeuge mit dem Werkstück in Eingriff treten. Die Fertigungszeit kann somit deutlich verkürzt werden. Es versteht sich, daß der Werkzeughalter nicht nur mit Abstechwerkzeugen verwendet werden kann. Prinzipiell sind alle Formen von Drehwerkzeugen möglich. Durch die Kombination unterschiedlicher Breiten der Hauptteile der Schneideinsätze und/oder unterschiedlicher Breiten von Distanzstücken kann eine Vielzahl von Profilen am Werkstück schnell und einfach erzeugt werden.

## Patentansprüche

1. Schneidplattenhalter für Drehwerkzeuge, wobei der Schneidplattenhalter dafür vorgesehen ist, mindestens zwei Drehwerkzeuge bzw. Stecheinsätze (1) zu halten, wobei die mindestens zwei Stecheinsätze (1) in der gehaltenen Position derart angeordnet sind, daß während eines Trennvorgangs zumindest zeitweise mindestens zwei Stecheinsätze (1) gleichzeitig mit einem Werkstück in Eingriff bringbar sind, wobei die mindestens zwei Stecheinsätze im wesentlichen parallel zueinander gehalten werden, **dadurch gekennzeichnet, daß** der Schneidplattenhalter mindestens zwei Halteelemente (8, 8', 8") aufweist, welche jeweils zum Halten eines Stecheinsatzes vorgesehen sind, wobei die Halteelemente in mindestens eine Richtung, vorzugsweise in Vorschubrichtung, unabhängig voneinander verstellbar sind.

2. Schneidplattenhalter nach Anspruch 1, **dadurch gekennzeichnet, daß** ein Grundkörper (20) vorgesehen ist, in dem Halteelemente (8, 8', 8") angeordnet sind, wobei die Halteelemente (8, 8', 8") in dem Grundkörper (20) fixierbar sind.

3. Schneidplattenhalter nach Anspruch 2, **dadurch gekennzeichnet, daß** eine Klemmvorrichtung (22) zur Fixierung der Halteelemente (8, 8', 8") im Grundkörper (20) vorgesehen ist.

4. Schneidplattenhalter nach einem der Ansprüche 2 oder 3, **dadurch gekennzeichnet, daß** die Halteelemente (8, 8', 8") austauschbar sind.

5. Schneidplattenhalter nach einem der Ansprüche 1 bis 4, **dadurch gekennzeichnet, daß** der Schneidplattenhalter dafür vorgesehen ist, die Stecheinsätze (1) in Längsrichtung bzw. axialer Richtung in mindestens zwei Positionen zu halten und zu fixieren.

6. Schneidplattenhalter nach Anspruch 5, **dadurch gekennzeichnet, daß** eine Klemmvorrichtung (16) zur Fixierung der Stecheinsätze (1) in Längsrichtung vorgesehen ist.

7. Schneidplattenhalter nach Anspruch 5 oder 6, **dadurch gekennzeichnet, daß** mindestens ein Distanzstück (15) dafür vorgesehen ist, zwischen zwei Stecheinsätzen (1) fixiert zu werden.

8. Schneidplattenhalter nach einem der Ansprüche 1 bis 7, **dadurch gekennzeichnet, daß** die Halteelemente (8, 8', 8") dafür vorgesehen ist, einen Stecheinsatz (1) in im wesentlichen drei Punkten (10', 10", 10"') zu stützen bzw. zu tragen.

9. Schneidplattenhalter nach einem der Ansprüche 1 bis 8, **dadurch gekennzeichnet, daß** jedes Halteelement (8, 8', 8") eine Befestigungseinrichtung (9, 13) zum Fixieren eines Stecheinsatzes (1) in dem Halteelement (8, 8', 8") aufweist.

10. Schneidplattenhalter nach einem der Ansprüche 1 bis 9 **dadurch gekennzeichnet, daß** eine Sicherungseinrichtung (28) vorgesehen ist, die ein Drehwerkzeug (1) bzw. eine Stechplatte oder ein Distanzstück (15) im Werkzeug- bzw. Plattensitz sichert, wobei die Sicherungseinrichtung (28) ein elastisches Element (29) aufweist, welches derart angeordnet ist, daß ein Drehwerkzeug (1) bzw. eine Stechplatte oder ein Distanzstück (15) nur unter Ausübung einer Kraft auf das elastische Element (29) in den Werkzeugsitz eingesetzt oder/und aus diesem herausgenommen werden kann.

11. Schneidplattenhalter nach Anspruch 10, **dadurch gekennzeichnet, daß** die Sicherungseinrichtung (29) eine Hülse (30) aufweist, in der das elastische Element (29) angeordnet ist.

12. Schneidplattenhalter nach einem der Ansprüche 10 oder 11, **dadurch gekennzeichnet, daß** die Sicherungseinrichtung (29) ein Kontaktelement (33) aufweist, welches dafür vorgesehen ist, mit einem Drehwerkzeug (1) oder einem Distanzstück (15) in Eingriff zu treten, wenn dieses in den Werkzeugsitz eingesetzt ist.

13. Schneidplattenhalter nach Anspruch 11 und 12, **dadurch gekennzeichnet, daß** das Kontaktelement (33) an der dem Werkzeugsitz zugewandten Seite des elastischen Elements (29) innerhalb der Hülse (30) angeordnet ist, wobei die Hülse (30) vorzugsweise an ihrem dem Werkzeugsitz zugewandten Ende Anschläge aufweist, die ein völliges Austreten des Kontaktelements (33) aus dem dem Werkzeugsitz zugewandten Ende (32) der Hülse (30) verhindern.

14. Schneidplattenhalter nach einem der Ansprüche 12 oder 13, **dadurch gekennzeichnet, daß** das Kontaktelement (33) um mindestens eine Achse dreh- oder schwenkbar ist.

15. Schneidplattenhalter nach einem der Ansprüche 10 bis 14, **dadurch gekennzeichnet, daß** eine Justiereinrichtung (31) vorgesehen ist, mit der die Kraft, die während des Einsetzens oder/und während des Herausnehmens des Drehwerkzeugs (1) oder des Distanzstücks (15) in bzw. aus dem Werkzeugsitz auf das elastische Element (29) ausgeübt werden muß, eingestellt werden kann.

16. Schneidplattenhalter nach Anspruch 15, **dadurch gekennzeichnet, daß** mehrere Sicherungseinrichtungen (29) vorgesehen sind, wobei vorzugsweise jedem aufzunehmenden Drehwerkzeug (1) und/oder jedem aufzunehmenden Distanzstück (15) eine Sicherungseinrichtung (28) zugeordnet ist.

17. Stechplatte zur Verwendung in einem Schneidplattenhalter nach einem der Ansprüche 10 bis 16, mit einem Hauptteil (2) sowie mindestens einem, eine Schneidkante (25) aufweisenden, Schneidteil (3), wobei das zumindest eine Schneidteil (3) eine im wesentlichen konstante Dicke (d3) aufweist, wobei die Stechplatte (1) zwei Seitenflächen sowie mehrere Kantenflächen in Kammern (5, 5', 5", 6, 7, 7', 7") aufweist und wobei die Schneidkanten (25) an den Kantenflächen angeordnet sind und die Kantenflächen Ausnehmungen (4) aufweisen, **dadurch gekennzeichnet, daß** die Stechplatte (1) eine Positionierungskerbe (26) aufweist, die dafür vorgesehen ist, im in den Schneidhalter eingesetzten Zustand mit einer Sicherungseinrichtung (29) in Eingriff zu treten, wobei die Positionierungskerbe (26) im Bereich einer Ausnehmung (4) einer Kantenfläche angeordnet ist.

18. Stechplatte nach Anspruch 17, **dadurch gekennzeichnet, daß** die Dicke (d2) des Hauptteils (2) größer als die Dicke (d3) des zumindest einen Schneideteils (3) ist.

19. Stechplatte nach einem der Ansprüche 17 oder 18, **dadurch gekennzeichnet, daß** die Schneidkante (25) an eine Spanfläche (5, 5', 5") und eine Freifläche (6) grenzt, wobei die Spanfläche (5) eine Fase (5') und/oder einen gekrümmten Abschnitt (5") aufweist.

20. Stechplatte nach einem der Ansprüche 17 bis 19, **dadurch gekennzeichnet, daß** die Stechplatte (1) derart ausgebildet ist, daß sich in dem in den Schneidplattenhalter eingesetzten Zustand ein positiver Spanwinkel bzw. Anstellwinkel ergibt.

21. Stechplatte nach Anspruch 20, **dadurch gekennzeichnet, daß** die Stechplatte (1) mehrere, vorzugsweise vier, Schneidteile (3) mit Schneidkanten (25) aufweist, wobei jeder Schneidkante (25) eine Positionierungskerbe (26) zugeordnet ist.

22. Stechplatte nach Anspruch 20 oder 21, **dadurch gekennzeichnet, daß** die Ausnehmung (4) im wesentlichen V-förmig ist, wobei die Positionierungskerbe (26) an einem V-Schenkel angeordnet ist.

23. Stechplatte nach Anspruch 17, **dadurch gekennzeichnet, daß** die Positionierungskerbe (26) im wesentlichen im Bereich des Schneidkantenrückens (7") angeordnet ist.

24. Stechplatte nach einem der Ansprüche 17 bis 23, **dadurch gekennzeichnet, daß** die Positionierungskerbe (26) sich in axialer Richtung im wesentlichen entlang der gesamten Breite der Stechplatte erstreckt.

25. Distanzstück (15) zur Verwendung in einem Schneidplattenhalter nach einem der Ansprüche 10 bis 16, **dadurch gekennzeichnet, daß** es eine Positionierungskerbe (27) aufweist, die dafür vorgesehen ist, mit einer Sicherungseinrichtung (28) in Eingriff zu treten.

## Claims

1. Cutting-bit holder for turning tools, wherein the cutting-bit holder is provided for the holding of at least two turning tools or cutting-inserts (1), wherein the at least two cutting-off inserts (1) are arranged in the held position such that during a cutoff process at least at times at least two cutting-off inserts (1) engage simultaneously with a workpiece, wherein the at least two cutting-off inserts are held essentially parallel to each other, **characterised in that** the cutting-bit holder has at least two holding elements (8, 8', 8") each of which is provided for the holding of a cutting-off insert (1), wherein the holding elements (8, 8', 8") are able to be adjusted in at least one direction, preferably in the direction of feed independently of each other.

2. Cutting-bit holder according to claim 1, **characterized in that** a basic body (20) is provided in which holding elements (8, 8', 8") are arranged, the holding elements (8, 8', 8") being able to be fixed in the basic body (20).

3. Cutting-bit holder according to claim 2, **characterized in that** a clamping device (22) is provided for the fixing of the holding elements (8, 8', 8") in the basic body (20).

4. Cutting-bit holder according to one of claims 2 or 3, **characterized in that** the holding elements (8, 8', 8") are able to be replaced.

5. Cutting-bit holder according to one of claims 1 to 4, **characterized in that** the cutting-bit holder is provided for the holding of the cutting-off inserts (1) in longitudinal direction or axial direction in at least two positions and for the fixing of them.

6. Cutting-bit holder according to claim 5, **characterized in that** a clamping device (16) is provided for the fixing of the cutting-off inserts (1) in longitudinal direction.

7. Cutting-bit holder according to claim 5 or 6, **characterized in that** at least one spacer (15) is provided for fixing between two cutting-off inserts (1).

8. Cutting-bit holder according to one of claims 1 to 7, **characterized in that** the holding elements (8, 8', 8") are provided for the support or bearing of a cutting-off insert (1) at essentially three points (10', 10", 10'").

9. Cutting-bit holder according to one of claims 1 to 8, **characterized in that** each holding element (8, 8', 8") has an attachment apparatus (9, 13) for the fixing of a cutting-off insert (1) in the holding element (8, 8', 8").

10. Cutting-bit holder according to one of claims 1 to 9, **characterized in that** a safety apparatus (28) is provided which secures a turning tool (1) or a cutting-off bit or a spacer (15) in the tool or bit seat, the safety apparatus (28) having an elastic element (29) which is arranged such that a turning tool (1) or a cutting-off bit or a spacer (15) can be inserted into the tool seat and/or removed from the latter only when a force is exerted on the elastic element (29).

11. Cutting-bit holder according to claim 10, **characterized in that** the safety apparatus (29) has a sleeve (30) in which the elastic element (29) is arranged.

12. Cutting-bit holder according to one of claims 10 to 11, **characterized in that** the safety apparatus (29) contains a contact element (33) which is provided for engagement with a turning tool (1) or with a spacer (15) when the latter is inserted into the tool seat.

13. Cutting-bit holder according to claims 11 and 12, **characterized in that** the contact element (33) is arranged inside the sleeve (30) on the side of the elastic element (29) facing the tool seat, the sleeve (30) preferably having, at its end facing the tool seat, stops which prevent a complete emergence of the contact element (33) from the end (32) of the sleeve (30) facing the tool seat.

14. Cutting-bit holder according to one of claims 12 to 13, **characterized in that** the contact element (33) is able to be rotated or swivelled about at least one axis.

15. Cutting-bit holder according to one of claims 10 to 14, **characterized in that** an adjustment apparatus (31) is provided, with which the force that must be exerted on the elastic element (29) during the insertion of and/or removal of the turning tool (1) or of the spacer (15) into or from the tool seat can be set.

16. Cutting-bit holder according to claim 15, **characterized in that** several safety apparatuses (29) are provided, a safety apparatus (28) preferably being allotted to each turning tool (1) to be housed and/or to each spacer (15) to be housed.

17. Cutting-off bit for use in a cutting-bit holder according to one of claims 10 to 16, with a main part (2) plus at least one cutting part (3) having a cutting edge (25), wherein the at least one cutting part (3) has an essentially constant thickness (d3), wherein the cutting-off bit (1) has two side surfaces plus several edge surfaces in chambers (5, 5', 5", 6, 7, 7', 7"), and wherein the cutting edges (25) are arranged at the edge surfaces and the side surfaces have recesses (4), **characterised in that** the cutting-off bit (1) has a positioning notch (26) which is provided for engagement with a safety apparatus (29) in the position when inserted into the cutting-bit holder, the positioning notch (26) being arranged in the area of a recess (4) of a side surface

18. Cutting-off bit according to Claim 17, **characterized in that** the thickness (d2) of the main part (2) is greater than the thickness (d3) of the at least one cutting part (3).

19. Cutting-off bit according to one of claims 17 or 18, **characterized in that** the cutting edge (25) borders a top face (5, 5', 5") and a clearance face (6), the top face (5) having a chamfer (5') and/or a curved section (5").

20. Cutting-off bit according to one of claims 17 to 19, **characterized in that** the cutting-off bit (1) is developed such that a positive cutting rake or adjustment angle results in the position when inserted into the cutting-bit holder.

21. Cutting-off bit according to Claim 20, **characterized in that** the cutting-off bit (1) has several, preferably four cutting parts (3) with cutting edges (25), a positioning notch (26) being allocated to each cutting edge (25).

22. Cutting-off bit according to claim 20 or 21, **characterized in that** the recess (4) is essentially V-shaped, the positioning notch (26) being arranged at a V-leg.

23. Cutting-off bit according to claim 17, **characterized in that** the positioning notch (26) is arranged essentially in the area of the cutting-edge rear (7").

24. Cutting-off bit according to one of claims 25 to 28, **characterized in that** the positioning notch (26) extends in axial direction essentially along the whole width of the cutting-off bit.

25. Spacer (15) for use in a cutting-bit holder according to one of claims 10 to 16, **characterized in that** it has a positioning notch (27) which is provided for engagement with a safety apparatus (28).

## Revendications

1. Support de plaquette de coupe pour outils de tournage, le support de plaquette de coupe étant destiné à supporter au moins deux outils de tournage respectivement inserts de gravure (1), les deux inserts de gravure (1) au moins étant placés dans la position de support de telle sorte que, pendant un processus de sectionnement, au moins deux inserts de gravure (1) peuvent être amenés au moins partiellement en engagement simultanément avec une pièce, les au moins deux inserts de gravure étant supportés sensiblement parallèlement l'un à l'autre, **caractérisé en ce que** le support de plaquette de coupe comporte au moins deux éléments de retenue (8, 8', 8") qui sont destinés chacun à supporter un insert de gravure, les éléments de retenue pouvant être réglés indépendamment l'un de l'autre dans au moins un sens, avantageusement dans le sens d'avance.

2. Support de plaquette de coupe selon la revendication 1, **caractérisé en ce qu'**il est prévu un corps de base (1) dans lequel sont disposés des éléments de retenue (8, 8', 8"), les éléments de retenue (8, 8', 8") pouvant être fixés dans le corps de base (20).

3. Support de plaquette de coupe selon la revendication 2, **caractérisé en ce qu'**il est prévu un dispositif de serrage (22) pour fixer les éléments de retenue (8, 8', 8") dans le corps de base (20).

4. Support de plaquette de coupe selon l'une des revendications 2 ou 3, **caractérisé en ce que** les éléments de retenue (8, 8', 8") sont remplaçables.

5. Support de plaquette de coupe selon l'une des revendications 1 à 4, **caractérisée en ce que** le support de plaquette de coupe est destiné à supporter et fixer les inserts de gravure (1) dans au moins deux positions dans la direction longitudinale, respectivement la direction axiale.

6. Support de plaquette de coupe selon la revendication 5, **caractérisé en ce qu'**il est prévu un dispositif de serrage (16) pour fixer les inserts de gravure (1) dans la direction longitudinale.

7. Support de plaquette de coupe selon la revendication 5 ou 6, **caractérisé en ce qu'**il est prévu au moins une pièce d'écartement (15) destinée à être fixée entre deux inserts de gravure (1).

8. Support de plaquette de coupe selon l'une des revendications 1 à 7, **caractérisé en ce que** les éléments de retenue (8, 8', 8") sont destinés à tenir, respectivement supporter, un insert de gravure (1) sensiblement en trois points (10', 10", 10"').

9. Support de plaquette de coupe selon l'une des revendications 1 à 8, **caractérisé en ce que** chaque élément de retenue (8, 8', 8") comporte un dispositif de fixation (9, 13) destiné à fixer un insert de gravure (1) dans l'élément de retenue (8, 8', 8").

10. Support de plaquette de coupe selon l'une des revendications 1 à 9, **caractérisé en ce qu'**il comporte un dispositif de sécurité (28) qui maintient un outil de tournage (1), respectivement une plaquette de gravure ou une pièce d'écartement (15), dans le siège d'outil respectivement de plaquette, le dispositif de sécurité (28) comportant un élément élastique (29) qui est disposé de telle sorte qu'un outil de tournage (1), respectivement une plaquette de gravure ou une pièce d'écartement (15), ne peut être inséré dans le siège d'outils, et en être extrait, qu'en exerçant une force sur l'élément élastique (29).

11. Support de plaquette de coupe selon la revendication 10, **caractérisé en ce que** le dispositif de sécurité (29) comporte un manchon (30) dans lequel est placé l'élément élastique (29).

12. Support de plaquette de coupe selon l'une des revendications 10 ou 11, **caractérisé en ce que** le dispositif de sécurité (29) comporte un élément de contact (33) qui est destiné à venir en engagement avec un outil de tournage (1) ou une pièce d'écartement (15) lorsque celui-ci est inséré dans le siège d'outil.

13. Support de plaquette de coupe selon la revendication 11 et 12, **caractérisé en ce que** l'élément de contact (33) est disposé du côté de l'élément élastique (29) qui est dirigé vers le siège d'outil à l'intérieur du manchon (30), le manchon (30) comportant avantageusement à son extrémité dirigée vers le siège d'outil des butées qui empêchent l'élément de contact (33) de sortir totalement de l'extrémité (32) du manchon (30) qui est dirigée vers le siège d'outil.

14. Support de plaquette de coupe selon l'une des revendications 12 ou 13, **caractérisé en ce que** l'élément de contact (33) est apte à tourner ou pivoter autour d'au moins un axe.

15. Support de plaquette de coupe selon l'une des revendications 10 à 14, **caractérisé en ce qu'**il est prévu un dispositif de réglage (31) permettant de régler la force qui doit être exercée sur l'élément élastique (29) pendant l'insertion de l'outil de tournage (1) ou de la pièce d'écartement (15) dans le siège d'outil et/ou pendant son extraction du siège d'outil.

16. Support de plaquette de coupe selon la revendication 15, **caractérisé en ce qu'**il est prévu plusieurs dispositifs de sécurité (29), un dispositif de sécurité (28) étant associé avantageusement à chaque outil de tournage (1) à recevoir et/ou à chaque pièce d'écartement (15) à recevoir.

17. Plaquette de gravure destinée à être utilisée dans un support de plaquette de coupe selon l'une des revendications 10 à 16, la plaquette de gravure comportant une partie principale (2) ainsi qu'au moins une partie de coupe (3) comportant une arête de coupe (25), la partie de coupe (3) au moins ayant une épaisseur (d3) sensiblement constante, la plaquette de gravure (1) comportant deux faces latérales ainsi que plusieurs faces d'arête en cavités (5, 5', 5", 6, 7, 7", 7") et les arêtes de coupe (25) étant disposées sur les faces d'arête et les faces d'arête comportant des évidements (4), **caractérisé en ce que** la plaquette de gravure (1) comporte une encoche de positionnement (26) qui est destinée à venir en engagement avec un dispositif de sécurité (29) dans l'état inséré dans le support de coupe, l'encoche de positionnement (26) étant ménagée au niveau d'un évidement (4) d'une face d'arête.

18. Plaquette de gravure selon la revendication 17, **caractérisée en ce que** l'épaisseur (d2) de la partie principale (2) est supérieure à l'épaisseur (d3) de la partie de coupe (3) au moins.

19. Plaquette de gravure selon l'une des revendications 17 et 18, **caractérisée en ce que** l'arête de coupe (25) est adjacente à une face de coupe (5, 5', 5") et une face de dépouille (6), la face de coupe (5) comportant une facette (5') et/ou une portion incurvée (5").

20. Plaquette de gravure selon l'une des revendications 17 à 19, **caractérisée en ce que** la plaquette de gravure (1) est conformée de sorte qu'un angle de coupe, respectivement un angle d'attaque positif, est obtenu dans l'état inséré dans le support de plaquette de coupe.

21. Plaquette de gravure selon la revendication 20, **caractérisée en ce que** la plaquette de gravure (1) comporte plusieurs, avantageusement quatre, parties de coupe (3) comprenant des arêtes de coupe (25), une encoche de positionnement (26) étant associée à chaque arête de coupe (25).

22. Plaquette de gravure selon la revendication 20 ou 21, **caractérisée en ce que** l'évidement (4) a sensiblement la forme d'un V, l'encoche de positionnement (26) étant placée au niveau d'une branche du V.

23. Plaquette de gravure selon la revendication 17, **caractérisée en ce que** l'encoche de positionnement (26) est placée sensiblement dans la région du dos (7") de l'arête de coupe.

24. Plaquette de gravure selon l'une des revendications 17 à 23, **caractérisée en ce que** l'encoche de positionnement (26) s'étend dans une direction axiale sensiblement sur toute la largeur de la plaquette de gravure.

25. Pièce d'écartement (15) destinée à être utilisée dans un support de plaquette de coupe selon l'une des revendications 10 à 16, **caractérisée en ce qu'**elle comporte une encoche de positionnement (27) qui est destinée à venir en engagement avec un dispositif de sécurité (28).
